# EUROPÄISCHE PATENTSCHRIFT

(11) **EP 0 495 816 B1**
(45) Veröffentlichungstag und Bekanntmachung des Hinweises auf die Patenterteilung: **03.01.1996**
(21) Anmeldenummer: 90914710.0
(22) Anmeldetag: 05.10.1990
(51) Int. Cl.: H04N 3/22

(54) **VERFAHREN ZUM POSITIONIEREN EINES LICHTSTRAHLS AUF EINER BILDFLÄCHE**
PROCESS FOR POSITIONING A LIGHT BEAM ON A PICTURE AREA
PROCEDE POUR POSITIONNER UN FAISCEAU LUMINEUX SUR UNE SURFACE D'IMAGE

(30) Priorität: 13.10.1989 DE 3934229
(43) Veröffentlichungstag der Anmeldung: 29.07.1992
(73) Patentinhaber: DEUTSCHE THOMSON-BRANDT GMBH, D-78048 Villingen-Schwenningen (DE)
(72) Erfinder: GLEIM, Günter, D-7730 Villingen (DE); CHAUVIN, Jacques, D-7733 Mönchweiler (DE)
(74) Vertreter: Einsel, Robert, Dipl.-Ing.
(86) Internationale Anmeldenummer: EP9001674
(87) Internationale Veröffentlichungsnummer: WO9106177

(56) Entgegenhaltungen:
- EP-A- 0 280 302
- WO-A-85/02512
- DE-A- 3 311 971
- US-A- 4 085 425
- US-A- 4 593 308
- Patent Abstracts of Japan, Band 11, Nr. 312 (E-548)(2759), 12. Oktober 1987; & JP-A-62104295
- Patent Abstracts of Japan, Band 13, Nr. 453 (E-831), 11. Oktober 1989; & JP-A- 01175479

## Beschreibung

Die Erfindung geht aus von einem Verfahren zum Positionieren eines Lichtstrahls auf einer Bildfläche gemäß dem Oberbegriff des Anspruchs 1.

Bei Projektions-Fernsehgeräten werden die in drei getrennten Bildröhren für R,G,B erzeugten monochromatischen Bilder auf eine Bildfläche projiziert und dort zur Darstellung eines farbigen Bildes zur Deckung gebracht. Dabei tritt die Aufgabe auf, das auf der Bildfläche von den drei Bildröhren geschriebene Ablenkraster relativ zur Bildfläche genau zu positionieren. Eine derartige genau Positionierung ist z.B. bei der Einstellung der Konvergenz oder sonstiger Ablenkparameter notwendig. Für die Beurteilung und Korrektur derartiger Parameter ist es bekannt, auf der Bildfläche ein Gittermuster aus waagerechten und senkrechten hellen Linien abzubilden. Die Lage dieses Gittermusters relativ zur Bildfläche muß dabei genau positioniert werden. Die Auswertung der Lage eines Lichtstrahls relativ zur Bildfläche kann auch dazu dienen, die Ablenkamplitude in horizontaler oder vertikaler Richtung zu kontrollieren, nachzuregeln, zu stabilisieren oder auf bestimmte unterschiedliche Werte einzustellen.

Bei derartigen Einrichtungen muß somit die Lage des Lichtstrahls relativ zu dem Sensor ermittelt werden. Das jeweilige Ausgangssignal des Sensors ist indessen von der Intensität des Lichtstrahls und von unvermeidbarem Fremdlicht abhängig, dem der Sensor zusätzlich ausgesetzt ist, siehe z.B. US- A-4085425 und DE-A-3311971.

Der Erfindung liegt die Aufgabe zugrunde, ein Verfahren zum Positionieren eines Lichtstrahls auf einer Bildfläche zu schaffen, das unabhängig von dem auf den Sensor einwirkenden Fremdlicht und bei unterschiedlichen Helligkeitseinstellungen einwandfrei arbeitet.

Diese Aufgabe wird durch die im Anspruch 1 angegebene Erfindung gelöst. Vorteilhafte Weiterbildungen der Erfindung sind in den Unteransprüchen angegeben.

Bei der erfindungsgemäßen Lösung werden also zunächst zwei Testmessungen durchgeführt, durch die Ausgangssignale des Sensors für vollständig belichteten und gar nicht belichteten Sensor ermittelt werden. Da beide Testmessungen auch das auf den Sensor einfallende unerwünschte Fremdlicht auswerten, kann der Einfluß des Fremdlichtes auf das Meßergebnis ausgeschaltet werden. Wenn die beiden Ausgangssignale für vollständig belichteten und gar nicht belichteten Sensor bekannt sind, ist dadurch unabhängig vom Fremdlicht und der Intensität des Lichstrahls auch das Ausgangssignal des Sensors gegeben, das bei einem nur halb oder teilweise vom Strahl beaufschlagten Sensor auftritt. Wenn die Positionierung des Strahls so erfolgt, daß das Ausgangssignal des Sensors gleich einem Mittelwert zwischen den Ausgangssignalen bei vollständig belichtetem und gar nicht belichtetem Sensor ist, so ist damit sichergestellt, daß der Strahl den Sensor zur Hälfte belichtet. Dadurch ist dann eine definierte Lage des Strahls zum Sensor sichergestellt.

Für die Testmessungen und die anschließende Positionierung des Lichtstrahls kann es vorteilhaft sein, den Strahl nach einer bekannten Modulationsart zu modulieren, z.B. in der Amplitude durch Tastung auf unterschiedliche Werte. Die Auswertschaltung enthält dann einen selektiven, auf die Modulation ansprechenden Schaltungsteil. Durch eine derartige Selektivität kann die Empfindlichkeit der Auswertschaltung gegenüber einfallendem Fremdlicht oder sonstigen Störungen verringert werden, weil die Störungen in allgemein nicht die Frequenz haben, auf die der selektive Schaltungsteil der Auswertschaltung anspricht.

Die Erfindung wird anhand der Zeichnung an einem Ausführungsbeispiel für ein Fernseh-Projektionsgerät erläutert. Darin zeigen
- Fig. 1: im Prinzip eine Bildfläche mit einem Gittermuster und einem Sensor,
- Fig. 2, 3: die drei aufeinanderfolgenden Phasen in der Belichtung des Sensors und
- Fig. 4: ein vereinfachtes Schaltbild für die Auswertung der Ausgangssignale des Sensors.

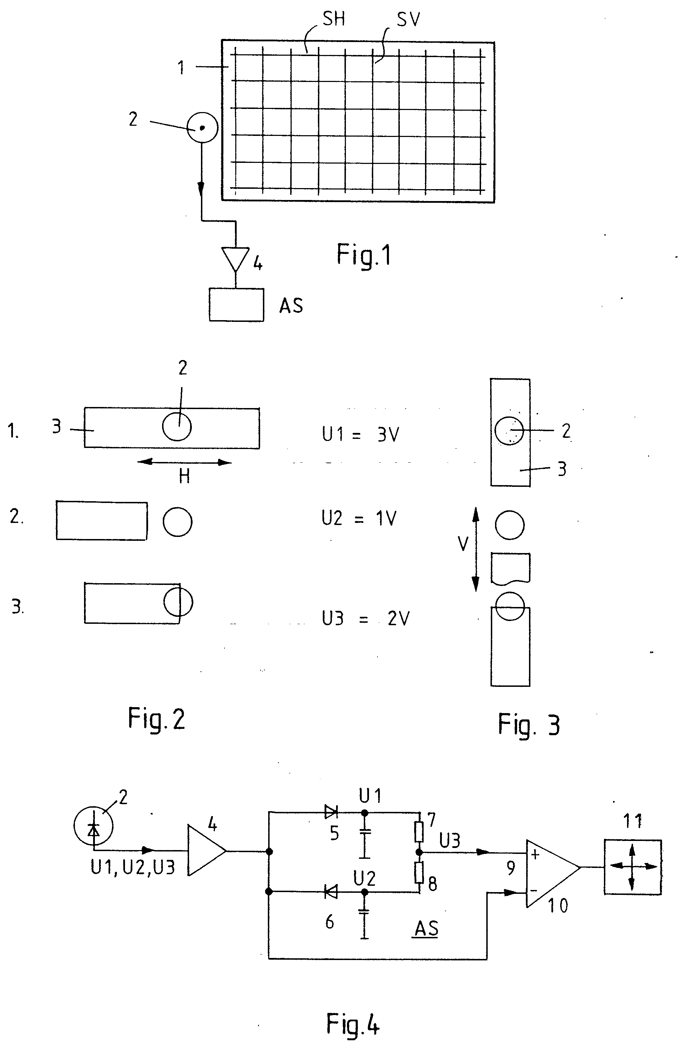

Fig. 1 zeigt eine Bildfläche 1 eines Fernseh-Projektionsgerätes, auf der mit drei getrennten Bildröhren für R, G, B ein Gittermuster aus waagerechten hellen Streifen SH und senkrechten hellen Streifen SV abgebildet ist. Ein derartiges Gittermuster dient zur Beurteilung und Korrektur der Konvergenz und die Ermittlung von Konvergenz-Korrekturwerten, die in bekannter Weise jeweils für einen Kreuzungspunkt des Gittermusters gespeichert werden. Für eine genaue Positionierung des Gittermusters relativ zum Bildschirm 1 ist auf der Bildfläche innerhalb oder außerhalb des Bildbereiches für das Nutzbild ein Lichtsensor 2 angeordnet. Der Sensor 2 kann aus mehreren Sensoren oder Sensorelementen bestehen und dient zur Positionierung der Lage des geschriebenen Ablenkrasters in horizontaler und vertikaler Richtung. Das Ausgangssignal des Sensors 2 wird über den Verstärker 4 der Auswertschaltung AS zugeführt.

Fig. 2, 3 zeigen den Sensor 2 und den den Sensor 2 beaufschlagenden Lichtstrahl 3 für die Positionierung in Horizontalrichtung H und Vertikalrichtung V. In einem ersten Schritt wird das der Strahl 3 auf der Bildfläche 1 so positioniert, daß der Sensor 2 vollständig durch den Strahl 3 belichtet wird. Der Sensor 2 liefert dabei ein Ausgangssignal U1 = 3V, das einerseits durch den Lichtstrahl 3 und zusätzlich durch einfallende Fremdlicht erzeugt wird. In einem darauffolgenden zweiten Schritt wird der Strahl 3 abgeschaltet oder auch ganz aus dem Bereich des Sensors 2 verschoben, so daß der Sensor 2 durch den Lichtstrahl 3 überhaupt nicht mehr belichtet wird und allenfalls noch Fremdlicht auf den Sensor 2 fällt. Dadurch entsteht ein Ausgangssignal des Sensors von U2 = 1V, das nur auf einfallendes Fremdlicht zurückzuführen ist.

Zwischen dem Ausgangssignal U1 für vollständig belichteten Sensor und dem Ausgangssignal U2 für gar nicht belichteten Sensor wird jetzt in einer Schaltung der Mittelwert von U3 = 2V gebildet. Über eine Steuerschaltung wird das Strahlenbündel 3 jeweils in Horizontalrichtung H oder in Vertikalrichtung V derart verschoben, daß das Ausgangssignal des Sensors den Wert von U3 = 2V annimmt. Wenn dieses Ausgangssignal U3 vorliegt, ist damit sichergestellt, daß der Strahl 3 den Sensor 2 zur Hälfte belichtet. Damit ist also eine genau definierte Lage des Strahls 3 relativ zum Sensor 2 gewährleistet.

U3 muß nicht genau der Mittelwert von U1 und U2 sein. U3 kann auch einen anderen Wert zwischen U1 und U2 darstellen, z.B. 1,5 oder 2,5 Volt. Der Wert entspricht dann einer anderen prozentualen partiellen Belichtung des Sensors 2.

In Fig. 4 liefert der Sensor 2 zeitlich nacheinander die Ausgangssignale U1, U2, U3 über den Verstärker 4 an zwei Gleichrichterschaltungen 5, 6. Die Gleichrichterschaltung 5 liefert den positiven Spitzenwert U1 und die Gleichrichterschaltung 6 den negativen Spitzenwert U2. Die Gleichrichterschaltung dient dabei gleichzeitig als Halteschaltung, damit die zeitlich nacheinander auftretenden Ausgangssignale U1, U2 gleichzeitig verfügbar sind. U1 und U2 werden über die Widerstände 7, 8 addiert, so daß am Eingang 9 des Differenzverstärkers 10 die Spannung U3, bei gleich großen Widerständen 7,8 U3 = (U1+U2)/2, auftritt.

U3 dient am Eingang des Differenzverstärkers 10 als Sollwert für die Ausgangssignale des Sensors 2, bei dem die gewünschte Lage des Strahles 3 zum Sensor 2, nämlich durch halbe oder partielle Belichtung, vorliegt.Die Ausgangsspannung des Verstärkers 10 steuert somit die Einrichtung 11, die eine Verschiebung des Ablenkrasters in Horizontalrichtung H oder Vertikalrichtung V ermöglicht.

Die Schaltung gemäß Fig. 4 wird von einem Prozessor entsprechend den genannten Schritten gesteuert, nämlich zunächst auf die Ermittlung von U1, dann auf die Ermittlung von U2 und danach für die Verschiebung des Ablenkrasters so, daß das Ausgangssignal des Sensors 2 den gewünschten Wert U3 für die richtige Lage zwischen Lichtstrahl und Sensor einnimmt.

Das Verfahren wurde anhand von Figur 1 bis 4 für einen Lichtstrahl 3 beschrieben, der Teil des geschriebenen Ablenkrasters bildet. Der Lichtstrahl kann auch ein Strahlenbündel aus mehreren Lichtstrahlen für verschiedene Farben sein. Die einzelnen Strahlen des Strahlenbündels stammen dann z.B. von drei Bildröhren für die Grundfarben R, G, B, die auf der Bildfläche 1 je ein monochromatisches Bild erzeugen. Die von den drei Bildröhren auf der Bildfläche 1 überlagerten Ablenkraster dienen dann zur Erzeugung eines farbigen Bildes und zur Erzeugung des vorzugsweise weißen Lichtstrahls für die genaue Positionierung des geschriebenen Ablenkrasters mittels des Sensors 2.

## Patentansprüche

1. Verfahren zum Positionieren eines Lichtstrahls auf einer Bildfläche mit einem auf der Bildfläche (1) angeordneten, vom Strahl beaufschlagten Lichtsensor (2), **gekennzeichnet durch**, folgende Schritte:
a) Der Lichtstrahl (3) wird so gesteuert, daß er den Sensor (2) vollständig belichtet, und das dabei gewonnene erste Ausgangssignal (U1) des Sensors (2) wird einer Auswertschaltung (AS) zugeführt.
b) Der Lichtstrahl (3) wird so gesteuert, daß er den Sensor (2) gar nicht trifft, und das dabei gewonnene zweite Ausgangssignal (U2) des Sensors (2) wird ebenfalls der Auswertschaltung (AS) zugeführt.
c) Die Positionierung des Lichtstrahls (3) erfolgt derart, daß der Strahl (3) auf ein Sensor-Ausgangssignal mit einem Mittelwert (U3) zwischen dem ersten und zweiten Ausgangssignal (U1, U2) gesteuert wird.

2. Verfahren nach Anspruch 1, **dadurch gekennzeichnet**, daß die Ausgangssignale (U1, U2) Gleichrichter- oder Halte-schaltungen (5, 6) zugeführt sind, deren Ausgangssignale an eine das Signal (U3) mit dem Mittelwert liefernde Addierstufe (7, 8) angelegt sind.

3. Verfahren und Anspruch 1, **dadurch gekennzeichnet**, daß der Strahl moduliert ist und die Auswertschaltung einen selektiven, auf die Modulation ansprechenden Schaltungsteil aufweist.

4. Verfahren nach Anspruch 1, **dadurch gekennzeichnet**, daß der Lichtstrahl (3) ein Strahlenbündel aus mehreren Lichtstrahlen verschiedener Farbe (RGB) ist.

5. Verfahren nach Anspruch 1, **dadurch gekennzeichnet**, daß für Merkmal b) der Lichtstrahl (3) vollständig abgeschaltet wird.

## Claims

1. A method for positioning a light beam on a picture area with a light sensor (2) located on the picture area (1) and illuminated by the beam, **characterised by** the following steps:
a) The light beam (3) is controlled in such a way that it fully illuminates the sensor (2), and the thus obtained first output signal (U1) of the sensor (2) is fed to an evaluation circuit (AS).
b) The light beam (3) is controlled in such a way that it does not intercept the sensor (2) at all, and the thus obtained second output signal (U2) of the sensor (2) is also fed to the evaluation circuit (AS) .
c) The positioning of the light beam (3) occurs in such a way that the beam (3) is adjusted to a sensor output signal having a mean value (U3) between the first and the second output signal (U1, U2).

2. A method according to claim 1, **characterised in that** the output signals (U1, U2) are fed to rectifier or holding circuits (5, 6), the output signals of which are applied to an adding stage (7, 8) which supplies the signal (U3) having the mean value.

3. A method according to claim 1, **characterised in that** the beam is modulated and the evaluation circuit has a selective circuit section responding to the modulation.

4. A method according to claim 1, **characterised in that** the light beam (3) is a bundle of rays made of several light beams of different colours (RGB).

5. A method according to claim 1, **characterised in that** for feature b) the light beam (3) is switched off completely.

## Revendications

1. Procédé pour le positionnement d'un rayon lumineux sur un champ d'image à l'aide d'un détecteur de lumière (2) disposé sur le champ d'image (1) et exposé au rayon, caractérisé par les étapes suivantes:
a) Le rayon lumineux (3) est dirigé de façon que le détecteur (2) soit entièrement exposé, et le premier signal de sortie (U1) émis par le détecteur (2) est amené à un circuit d'évaluation (AS).
b) Le rayon lumineux (3) est dirigé de façon à ne pas toucher le détecteur (2) du tout, et le deuxième signal de sortie (U2) émis par le détecteur (2) est également amené à un circuit d'évaluation (AS).
c) Le positionnement du rayon lumineux (3) s'effectue de façon que le rayon (3) soit dirigé sur un signal de sortie du détecteur avec la moyenne (U3) obtenue à partir du premier et du second signal de sortie (U1, U2).

2. Procédé selon la revendication 1, caractérisé en ce que les signaux de sortie (U1, U2) sont amenés à des circuits de redresseur ou de fixation (5, 6), dont les signaux de sortie sont appliqués à un circuit additionneur (7,8) qui fournit le signal (U3) à l'aide de la moyenne.

3. Procédé et revendication 1, caractérisés en ce que le rayon est modulé et que le circuit d'évaluation comporte un élément sélectif répondant à la modulation.

4. Procédé selon la revendication 1, caractérisé en ce que le rayon lumineux (3) est un faisceau composé de plusieurs rayons lumineux de couleurs différentes (RGB).

5. Procédé selon la revendication 1 caractérisé en ce que le rayon lumineux (3) est complètement supprimé dans le cas de la caractéristique b).
